# FASCICULE DE BREVET EUROPEEN

(11) **EP 1 773 629 B1**
(45) Date de publication et mention de la délivrance du brevet: **21.01.2015**
(21) Numéro de dépôt: 05778662.6
(22) Date de dépôt: 22.06.2005
(51) Int. Cl.: B60R 19/18, B60R 19/12, B60R 19/52, B60R 21/34

(54) **PIECES POUR VEHICULES AUTOMOBILES COMPRENANT UN ABSORBEUR D'ENERGIE VOIE BASSE**
KRAFTFAHRZEUGTEILE MIT NIEDERBEREICHSMOTORDÄMPFER
PARTS FOR MOTOR VEHICLES COMPRISING A LOW AREA ENERGY ABSORBER

(30) Priorité: 23.06.2004 FR 0406873
(43) Date de publication de la demande: 18.04.2007
(73) Titulaire: Compagnie Plastic Omnium, 69007 Lyon (FR)
(72) Inventeur: TROTON, Jean, 81375 Munich (DE); ROUX, Jean-Pierre, F-69480 Pommiers (FR)
(74) Mandataire: Remy, Vincent Noel Paul
(86) Numéro de dépôt international: PCT/FR2005/001575
(87) Numéro de publication internationale: WO 2006/008394

(56) Documents cités:
- EP-A- 1 067 039
- EP-A- 1 300 296
- FR-A- 2 840 573
- PATENT ABSTRACTS OF JAPAN vol. 1998, no. 05, 30 avril 1998 (1998-04-30) -& JP 10 006889 A (MAZDA MOTOR CORP), 13 janvier 1998 (1998-01-13)

## Description

La présente invention concerne une pièce pour véhicule automobile comprenant un absorbeur d'énergie voie basse.

Dans les véhicules automobiles, on connaît les appuis bas qui sont destinés à protéger les jambes des piétons lors des chocs.

Ces appuis bas doivent comporter une structure pour assurer la décélération de la jambe au moment du choc sans dépasser un certain seuil, au-delà duquel la jambe pourrait subir de graves dommages.

Des normes européennes, par exemple, fournissent des exemples de tels seuils.

Les voies basses actuellement utilisées sont souvent constituées par une combinaison d'une structure rigide, par exemple un tube métallique, située à l'intérieur du véhicule, et d'un absorbeur placé devant la structure rigide et qui se déforme lors du choc.

Une difficulté liée à une telle voie basse est que l'absorbeur doit être maintenu derrière la peau de pare-chocs. Pour l'efficacité de la protection, il est en effet souhaitable de laisser un jeu minimal entre l'absorbeur et la peau, afin que la course d'enfoncement de la jambe soit intégralement mise à profit pour absorber l'énergie du choc.

On sait cependant que la fixation d'une pièce quelconque sur une peau de carrosserie en matière plastique pose des problèmes esthétiques car des marques peuvent apparaître sur la face visible de la peau à la suite de soudures ou en raison de retassures qui se produisent au droit de nervures ou de languettes de fixation.

Une pièce pour véhicule automobile selon le préambule de la revendication 1 est connue du document FR 2 840 573 A1.

La présente invention vise à fournir une nouvelle pièce qui assure le rôle d'absorbeur entre une peau de pare-chocs et une structure rigide de voie basse, et dont la fixation à la peau de pare-chocs ne pose aucune difficulté.

La présente invention propose une pièce automobile selon la revendication 1.

La pièce selon l'invention est donc le résultat de la réunion en une seule pièce d'une grille d'entrée d'air et d'un absorbeur qui se positionne entre la structure rigide de la voie basse et la peau du pare-chocs.

La fixation de la grille à la peau de pare-chocs ne pose, en général, pas de difficultés car les bords de l'ouverture d'entrée d'air, qui est ménagée dans la peau de pare-chocs, peuvent comporter des moyens d'encliquetage, de collage ou de soudage à la périphérie de l'ouverture d'entrée d'air.

La pièce selon l'invention peut donc être fixée à la peau de pare-chocs grâce aux fixations qui sont traditionnellement prévues pour une grille d'entrée d'air seule.

Grâce à l'absorbeur, qui joue le rôle d'entretoise entre la structure rigide et la peau du pare-chocs, la forme du pare-chocs peut être adaptée facilement aux contraintes géométriques imposées par la structure rigide, y compris lorsque le galbe du pare-chocs est très marqué.

Selon l'invention, la grille et l'absorbeur sont réalisés d'un seul tenant, par exemple en étant issus d'une même opération de moulage.

Avantageusement, la grille et l'absorbeur sont réalisés en matière plastique.

Afin de mieux faire comprendre l'invention, on va en décrire maintenant un mode de réalisation donné à titre d'exemple non limitatif de la portée de l'invention, en référence aux dessins annexés dans lesquels :
- la figure 1 est une vue de l'intérieur d'une peau de pare-chocs avant et d'une pièce selon un mode de réalisation de l'invention ;
- la figure 2 représente, à plus grande échelle, la pièce de la figure 1 séparée du pare-chocs ;
- la figure 3 est une vue en coupe et en perspective selon le plan III-III de la figure 1.

La peau de pare-chocs 1 représentée sur les dessins est réalisée en polypropylène et comporte, en partie centrale et dans sa zone inférieure, une ouverture d'entrée d'air 3 pour l'alimentation d'un circuit de refroidissement (non représenté).

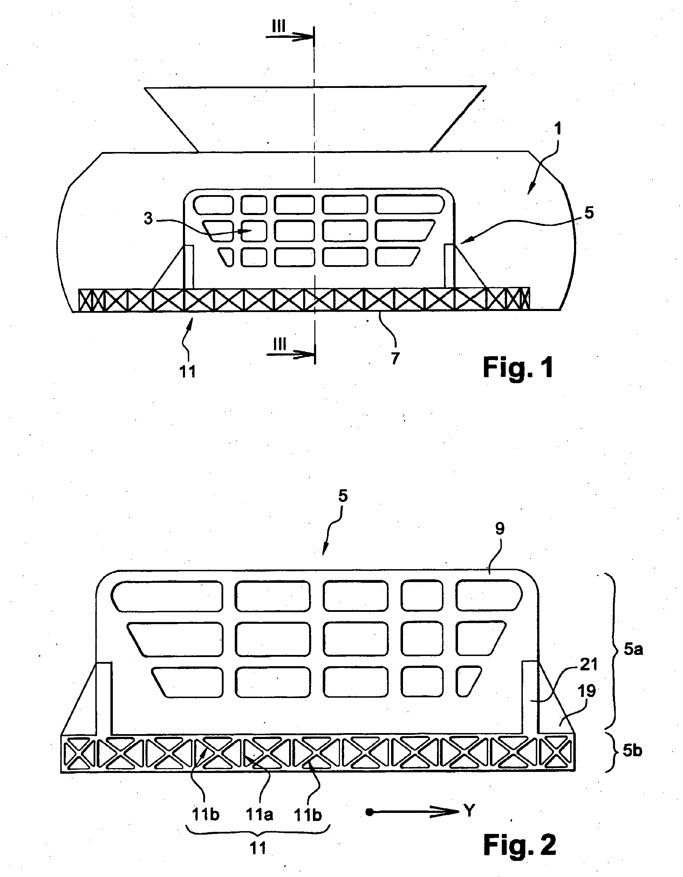

Une pièce 5 d'un seul tenant est placée contre la face intérieure (visible sur la figure 1) de la peau de pare-chocs, en regard de l'ouverture d'entrée d'air 3, et le long du bord inférieur 7 de la peau.

Cette pièce 5, qui est mieux visible sur la figure 2, comprend une partie supérieure 5a constituant une grille d'entrée d'air, de configuration connue en soi, et une partie inférieure 5b constituant un absorbeur de chocs pour piétons.

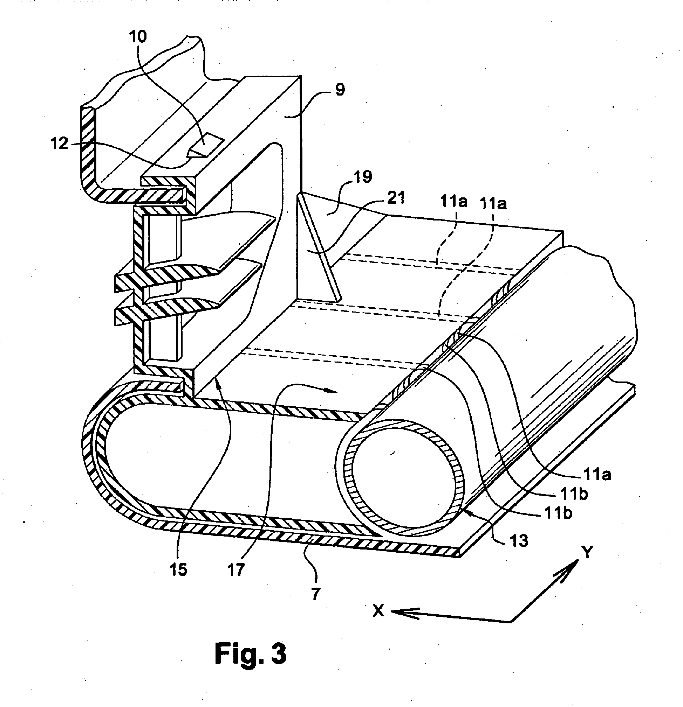

Sur la figure 3, on voit mieux la forme de la grille d'entrée d'air et de l'absorbeur.

La grille comporte un contour 9 à section en U qui permet son encliquetage sur la peau 1 de pare-chocs grâce à des formes en relief classiques 10 prévues sur la peau, le long du contour de l'ouverture d'entrée d'air 3 et à des découpes 12 ménagées dans le contour 9 à section en U de la grille.

L'absorbeur est formé par un réseau de nervures 11 parallèles à la direction longitudinale (X) du véhicule.

On voit, sur la figure 2, que des nervures verticales 11a (par rapport aux dessins) délimitent des alvéoles de section rectangulaire à l'intérieur desquelles sont formés des croisillons de nervures obliques 11 b.

Cette distribution des nervures, connue en elle-même, a pour objet d'absorber l'énergie de chocs dirigés selon la direction longitudinale X du véhicule.

Lors des chocs, les nervures 11 flambent au fur et à mesure que la jambe s'enfonce dans le pare-chocs.

On voit que sur sa face arrière, l'absorbeur est conformé pour s'adapter à la pièce de structure qui est, dans l'exemple représenté, constituée par un tube métallique 13.

De même, à l'avant, l'absorbeur épouse sensiblement la forme de la face intérieure de la peau de pare-chocs 1 afin de réaliser l'adaptation du style du pare-chocs à la géométrie du tube métallique.

Ainsi, si le pare-chocs présente un galbe très marqué, il n'est pas nécessaire que le tube métallique suive ce galbe étant donné que l'absorbeur peut avoir une longueur (dans la direction longitudinale X) variable en différents points de la largueur du véhicule.

Par ailleurs, la distribution des nervures peut varier en fonction de l'emplacement selon la direction transversale (Y), comme on le voit sur la figure 2, afin que la résistance à la déformation de l'absorbeur soit optimale en tous points de la largeur du véhicule.

La grille et l'absorbeur sont liés par le bord inférieur 15 de la grille qui se raccorde au plan supérieur 17 de l'absorbeur, la solidarisation entre ces deux pièces résultant du fait qu'elles sont issues de la même opération de moulage.

De part et d'autre de la grille, des voiles verticaux 19 (dans la position représentée par les dessins) participent à la liaison entre la grille et l'absorbeur afin de la rigidifier.

De plus, une nervure 21 orthogonale à la grille et verticale (dans la position représentée par les dessins) contribue à maintenir l'angle droit formé par la grille sensiblement verticale et le plan supérieur 17 de l'absorbeur.

## Revendications

1. Pièce pour véhicule automobile comprenant un absorbeur d'énergie (5b) destiné à prendre place entre une peau de pare-chocs (1) et une structure rigide (13) fixée à la caisse du véhicule, la pièce comprenant une grille d'entrée d'air (5a) solidaire de l'absorbeur, la grille et l'absorbeur étant réalisés d'un seul tenant, **caractérisée en ce que** l'absorbeur d'énergie (5b) est un absorbeur d'énergie voie basse, adapté pour absorber l'énergie due à un choc avec une jambe de piéton, et **en ce que** ladite grille est munie de moyens de fixation (12) à la peau de pare-chocs.

2. Pièce selon la revendication 1, dans laquelle la grille et l'absorbeur sont issus d'une même opération de moulage.

3. Pièce selon la revendication 1 ou 2, comprenant des voiles verticaux (19), agencés de part et d'autre de la grille, et participant à la liaison entre la grille et l'absorbeur.

4. Pièce selon l'une quelconque des revendications précédentes, dans laquelle la grille et l'absorbeur sont réalisés en matière plastique.

5. Pièce selon l'une quelconque des revendications précédentes, dans laquelle l'absorbeur est formé par un réseau de nervures (11) perpendiculaires à une direction longitudinale de la pièce, en particulier par des nervures (11a) délimitant des alvéoles à section rectangulaire à l'intérieur desquelles sont formés des croisillons de nervures obliques (11b).

6. Pièce selon la revendication précédente, dans laquelle les nervures (11) sont conformées pour flamber au fur et à mesure que la jambe s'enfonce dans le pare-chocs.

7. Pièce selon la revendication précédente, dans laquelle la distribution des nervures varie en fonction de leur emplacement selon la direction longitudinale de la pièce.

8. Pièce selon l'une quelconque des revendications précédentes, dans laquelle l'absorbeur présente un plan supérieur (17) formant un angle droit avec la grille, la pièce comportant de préférence une nervure (21) orthogonale à la grille et apte à maintenir l'angle droit.

9. Pièce selon l'une quelconque des revendications précédentes, dans laquelle les moyens de fixation de la pièce à la peau sont des moyens de fixation par encliquetage (12).

10. Véhicule automobile **caractérisé en ce qu'**il comprend une peau de pare-chocs (1), une structure rigide (13) fixée à une caisse du véhicule et une pièce selon l'une quelconque des revendications précédentes, l'absorbeur d'énergie (5b) prenant place entre la peau et la structure rigide.

11. Ensemble d'une peau de pare-chocs (1) et d'une pièce pour véhicule automobile selon l'une quelconque des revendications 1à 9, **caractérisé en ce que** l'absorbeur d'énergie (5b) est positionné derrière la peau de pare-chocs.

12. Ensemble selon la revendication précédente, dans lequel l'absorbeur (5b) est conformé pour épouser sensiblement la forme de la face intérieure de la peau de pare-chocs (1).

## Patentansprüche

1. Kraftfahrzeugteil, das eine Energieabsorptionsvorrichtung (5b) aufweist, die dazu bestimmt ist, zwischen einer Stoßfängerhaut (1) und einer starren Struktur (13), die an der Fahrzeugkarosserie befestigt ist, zu liegen, wobei das Teil ein Lufteinlassgitter (5a) aufweist, das fest mit der Absorptionsvorrichtung verbunden ist, wobei das Gitter und die Absorptionsvorrichtung aus einem einzigen Teil hergestellt sind, **dadurch gekennzeichnet, dass** die Energieabsorptionsvorrichtung (5b) eine Niederbereichsabsorptionsvorrichtung ist, die angepasst ist, um die Energie aufgrund eines Stoßes gegen ein Fußgängerbein zu absorbieren, und dadurch, dass das Gitter mit Mitteln zum Befestigen an der Stoßfängerhaut (12) versehen ist.

2. Teil nach Anspruch 1, bei dem das Gitter und die Absorptionsvorrichtung aus ein und demselben Formvorgang hervorgehen.

3. Teil nach Anspruch 1 oder 2, das vertikale Elemente (19) aufweist, die zu jeder Seite des Gitters eingerichtet sind und an der Verbindung zwischen dem Gitter und der Absorptionsvorrichtung teilnehmen.

4. Teil nach einem der vorhergehenden Ansprüche, bei dem das Gitter und die Absorptionsvorrichtung aus Kunststoff hergestellt sind.

5. Teil nach einem der vorhergehenden Ansprüche, bei dem die Absorptionsvorrichtung durch ein Netz von Rippen (11) senkrecht zu einer Längsrichtung des Teils ausgebildet ist, insbesondere aus Rippen (11a), die Zellen mit rechteckigem Querschnitt abgrenzen, in deren Innerem Kreuzungen schräger Rippen (11b) ausgebildet sind.

6. Teil nach dem vorhergehenden Anspruch, bei dem die Rippen (11) ausgebildet sind, um im Laufe des Eindringens des Beins in den Stoßfänger nach und nach zu knicken.

7. Teil nach dem vorhergehenden Anspruch, bei dem die Verteilung der Rippen in Abhängigkeit von ihrer Lage entlang der Längsrichtung des Teils variiert.

8. Teil nach einem der vorhergehenden Ansprüche, bei dem die Absorptionsvorrichtung eine obere Ebene (17) aufweist, die mit dem Gitter einen rechten Winkel bildet, wobei das Teil vorzugsweise eine Rippe (21) orthogonal zu dem Gitter und geeignet, um den rechten Winkel aufrechtzuerhalten, aufweist.

9. Teil nach einem der vorhergehenden Ansprüche, bei dem die Befestigungsmittel des Teils an der Haut Befestigungsmittel durch Einrasten (12) sind.

10. Kraftfahrzeug, **dadurch gekennzeichnet, dass** es eine Stoßfängerhaut (1), eine starre Struktur (13), die an einer Fahrzeugkarosserie befestigt ist, und ein Teil gemäß einem der vorhergehenden Ansprüche aufweist, wobei die Energieabsorptionsvorrichtung (5b) zwischen der Haut und der starren Struktur liegt.

11. Baugruppe aus einer Stoßfängerhaut (1) und einem Teil für Kraftfahrzeug nach einem der Ansprüche 1 bis 9, **dadurch gekennzeichnet, dass** die Energieabsorptionsvorrichtung (5b) hinter der Stoßfängerhaut positioniert ist.

12. Baugruppe nach dem vorhergehenden Anspruch, bei der die Absorptionsvorrichtung (5b) ausgebildet ist, um sich im Wesentlichen an die Form der Innenseite der Stoßfängerhaut (1) zu legen.

## Claims

1. A motor vehicle part including an energy absorber (5b) for positioning between a bumper skin (1) and a rigid structure (13) secured to the body of the vehicle, wherein the part comprises an air inlet grille (5a) secured to the energy absorber, and the grille and the energy absorber are made as a single piece, **characterized in that** the energy absorber (5b) is a low path energy absorber adapted to absorb the energy due to an impact with a leg of pedestrian, and **in that** said grille is provided with fastener means for fastening (12) to the bumper skin.

2. A motor vehicle part according to claim 1, in which the grille and the energy absorber are obtained by a single molding operation.

3. A motor vehicle part according to claim 1 or 2, comprising vertical webs (19) on either side of the grille, and contributing to connecting the grille and the energy absorber.

4. A motor vehicle part according to any of preceding claims, in which the grille and the energy absorber are made of plastics material.

5. A motor vehicle part according to any of preceding claims, wherein the energy absorber is formed by an array of ribs (11) perpendicular to a longitudinal direction of the vehicle part, in particular by ribs (11a) defining cells of rectangular section having oblique ribs (11b) formed therein in a cross configuration.

6. A motor vehicle part according to any of preceding claims, wherein the ribs (11) are configured to buckle progressively as the leg penetrates into the bumper.

7. A motor vehicle part according to any of preceding claims, wherein the distribution of the ribs may vary as a function of their position relative to the longitudinal direction of the vehicle part.

8. A motor vehicle part according to any of preceding claims, wherein the absorber has a top plane (17) forming a right angle with the grid, the vehicle part preferably comprising a rib (21) orthogonal to the grille and contributing to maintaining the right angle.

9. A motor vehicle part according to any of preceding claims, wherein the fastener means (12) for fastening the part to the bumper skin are snap-fastening means.

10. A motor vehicle **characterized in that** it comprises a bumper skin (1) and a rigid structure (13) secured to the body of the vehicle, and a motor vehicle part according to any of preceding claims, the energy absorber (5b) being positioned between the bumper skin (1) and the rigid structure (13).

11. System of a bumper skin (1) and a motor vehicle part according to any of claims 1 to 9, **characterized in that** the energy absorber (5b) is positioned behind the bumper skin (1).

12. System according to previous claim, wherein the energy absorber (5b) is conformed to substantially match the shape of the inside face of the bumper skin (1).
